Europäisches Patentamt

**European Patent Office**

Office européen des brevets

(11) Publication number: **0 233 007**
A2

# (12) EUROPEAN PATENT APPLICATION

(21) Application number: **87300651.4**

(51) Int. Cl.⁴: **A 63 F 3/06**

(22) Date of filing: **27.01.87**

(30) Priority: **31.01.86 GB 8602403**

(43) Date of publication of application: **19.08.87**
**Bulletin 87/34**

(84) Designated Contracting States: **AT BE CH DE ES FR GB GR IT LI NL SE**

(71) Applicant: **Sericol Group Limited, 24 Parsons Green Lane, London SW6 4HT (GB)**

(72) Inventor: **Kenehan, Peter Joseph Patrick, 37 St Benets Road, Westgate Kent (GB)**
Inventor: **Wonford, Colin Philip, 9 Mutrix Road, Westgate Margate Kent (GB)**

(74) Representative: **Claisse, John Anthony, Dr., 11 Evelyn Avenue, Ruislip Middlesex, HA4 8AR (GB)**

(54) **Coated substrates.**

(57) This invention concerns substrates having opaque, abrasion-removable masks thereon. The masks are formed by gelling a heat-gellable composition consisting of a pigmentary material and a plastisol. The plastisol is made from a liquid plasticiser and at least one synthetic homopolymer or copolymer. Such masks can be created without the use of an organic solvent, thereby enabling coated substrates, for example lottery tickets, to be produced which do not release such solvents. An example of one use of the invention is in the production of articles to be included with foodstuffs.

This invention concerns substrates having opaque, abrasion-removable masks thereon, for example in the form of lottery tickets.

Lottery tickets having removable masks are known in which complete removal of an opaque mask or selective removal of several masked areas from a number of masks on a ticket reveals a prize-winning combination, often for a substantial cash-prize.

Such tickets have hitherto been produced by first printing various indicia on a substrate by lithography or other means, the substrate usually being of paper or card. The indicia are generally coated with a protective layer of a transparent varnish which serves to protect the printed indicia and also to aid removal of the subsequently applied opaque, abrasion-removable mask which serves to hide whether or not the ticket has a winning combination of indicia.

The masks have been applied by screen printing or other printing processes using inks which contain an organic solvent which itself is required for the binder used in the ink. In order to facilitate printing, the solvent used had relatively low volatility to prevent premature drying. However this required the use of heated air in order to dry the masks, typically involving the use of a tunnel through which heated air is circulated.

According to the present invention there is provided a substrate having an opaque, abrasion removable mask thereon the mask comprising a heat-gelled composition, the composition before gelling comprising a pigmentary material and a plastisol comprising a liquid plasticiser and at least one synthetic homopolymer or copolymer.

The use of a composition based on a plastisol to form an abrasion removable mask overcomes a number of disadvantages of the prior art. For example, the time the printed mask has to be heated for the composition to be gelled is usually significantly less than has been required to drive off the organic solvent, thereby enabling more rapid printing and drying of the masks to be effected. The absence of a necessity for an organic solvent also avoids the risk of premature drying of the ink composition on the screen by solvent evaporation.

Another advantage of using compositions based on plastisols is that masks can be produced which do not give rise to an objectionable odour and therefore can be used on materials enclosed for example with foodstuffs, e.g. confectionery, or tobacco. In addition, it is possible to avoid the use of organic solvents and the consequent fire and health hazards.

The compositions used in the present invention include a pigment which serves to obscure the indicia over which they are printed. The pigment can be metallic, for example flake aluminium metal powder or bronze powder, or a suitable pigment compound, for example titanium dioxide.

The pigment can also act as an extender which adjusts the flow characteristics of the compositions. Examples of such extenders include barium sulphate, calcium carbonate, silicon dioxide, a silicate, zinc sulphide, alumina, magnesia or mica.

Examples of plasticisers which can be used include esters of phthalic, phosphoric or sebacic acids with a $C_4$ to $C_{13}$ alcohol, or a polyester derived from adipic, sebacic or azelaic acid and a glycol, or a chlorinated paraffin.

The synthetic polymer used in the compositions will be of a particle size such that an ink of suitable consistency can be formed, preferably with a particle size range of from 5 to 100 microns, advantageously from 10 to 60 microns.

The synthetic polymer used is preferably polyvinyl chloride or a vinyl chloride/vinyl acetate copolymer. The synthetic polymer may also be used in conjunction with at least one extender polymer to adjust the flow, hardness characteristics, or fusion temperature.

The ratio of synthetic polymer to plasticiser can be varied as desired to provide masks having a range of hardness and/or removability characteristics.

Although it is preferred that the compositions used in accordance with the present invention do not contain a solvent, they can contain some organic solvent or even water as a diluent. However, when a diluent is used, it should not be present in an amount which adversely affects the resultant properties of masks produced therefrom, in particular with respect to foodstuffs with which they may be packaged.

In general, the compositions used to form the abrasion removable masks will contain a stabiliser to extend the pot-life of the plastisol. Such stabilisers are well known in the art and include epoxy, organotin, and Ba/Cd and Pb/Cd compounds etc.

The present invention enables masks to be produced on a variety of varnished or unvarnished substrates, one particular application being the production of lottery tickets.

The following Examples are given by way of illustration only:

Example 1

| | |
|---|---|
| PVC paste-grade homopolymer | 35 |
| Di-(2-ethylhexyl) phthalate | 35 |
| Stabiliser | 1 |
| $BaSO_4$ | 11 |
| Aluminium Paste | 16 |
| $SiO_2$ | 2 |

The above ingredients were blended on a suitable stirrer so that the temperature remained below 40°C to form a screen printing ink composition. The composition was applied to a substrate by screen printing and then gelled by heating for 5 seconds using an Industrial Hi-dry short wave IR dryer (principal wave length 1.2 microns). The resultant film was opaque and abrasion-removable.

EXAMPLE 2

| | |
|---|---|
| PVC paste grade homopolymer | 30 |
| Di-butyl phthalate | 20 |
| $CaCO_3$ | 10 |
| $SiO_2$ | 3 |
| Aluminium Paste | 15 |
| Stabiliser | 1 |
| Chromophthal Yellow 3GDOP | 12 |
| Chromphthal Orange 4RDOP | 4 |
| White Spirit | 5 |

The above ingredients were blended as in Example 1 to produce a gold-coloured screen printing ink composition. The ink was applied to a substrate and gelled as in Example 1 to give a gold-coloured opaque abrasion-removable layer on the substrate.

Example 3

| | |
|---|---|
| PVC paste grade homopolymer | 25 |
| PVC extender polymer | 10 |
| Di-octyl phthalate | 30 |
| Stabiliser | 1 |
| Aluminium Paste | 15 |
| $BaSO_4$ | 16 |
| $SiO_2$ | 3 |

The above ingredients are blended as in Example 1 to produce a silver-coloured screen printing ink composition. The ink is applied to a substrate and gelled as in Example 1 to give a silver-coloured opaque abrasion removable layer on the substrate.

The inclusion of an extender polymer reduces dilatancy and viscosity of the plastisol.

CLAIMS

1. A substrate having an opaque, abrasion removable mask thereon the mask comprising a heat-gelled composition, the composition before gelling comprising a pigmentary material and a plastisol comprising a liquid plasticiser and at least one synthetic homopolymer or copolymer.

2. A substrate according to claim 1, wherein the pigmentary material includes a metallic pigment.

3. A substrate according to either of claims 1 and 2, wherein the pigmentary material comprises an insoluble dyestuff.

4. A substrate according to claim 1, wherein the pigmentary material comprises of soluble dyestuff.

5. A substrate according to any of the preceding claims, wherein the pigment includes an inert, non-colouring extender.

6. A substrate according to any of the preceding claims, wherein the plasticiser is an ester of phthalic, phosphoric or sebacic acid with a $C_4-C_{13}$ alcohol, or a polyester derived from adipic, sebacic or azelaic acid and a glycol, or a chlorinated paraffin.

7. A substrate according to any of the preceding claims, wherein the synthetic polymer comprises at least one PVC paste making homopolymer of mean particle size of from 5 to 100 microns, preferably 10 to 60 microns.

8. A substrate according to any of the preceding claims, which additionally contains at least one polyvinyl chloride/polyvinyl acetate copolymer.

9. A substrate according to any of the preceding claims, which additionally contains at least one extender polymer.

10. A substrate according to any of the preceding claims, containing a proportion of an organic solvent or water as diluent.

11. A substrate according to any of the preceding claims in the form of a lottery ticket.